# EUROPÄISCHE PATENTSCHRIFT

(11) **EP 2 667 689 B1**
(45) Veröffentlichungstag und Bekanntmachung des Hinweises auf die Patenterteilung: **24.10.2018**
(21) Anmeldenummer: 12169342.8
(22) Anmeldetag: 24.05.2012
(51) Int. Cl.: H05H 1/34

(54) **Elektrode für Plasmaschneidbrenner sowie deren Verwendung**
Electrode for plasma cutting torch and use of same
Électrode pour chalumeau de coupe au plasma ainsi que son utilisation

(43) Veröffentlichungstag der Anmeldung: 27.11.2013
(73) Patentinhaber: Kjellberg-Stiftung, 03238 Finsterwalde (DE)
(72) Erfinder: Laurisch, Frank, 03238 Finsterwalde (DE); Krink, Volker, 03238 Finsterwalde (DE)
(74) Vertreter: Pfenning, Meinig & Partner mbB

(56) Entgegenhaltungen:
- EP-A1- 2 457 681
- DE-U1- 29 905 658
- US-A- 4 675 493
- US-A- 5 726 414
- US-A- 6 099 915
- US-A1- 2002 144 982

## Beschreibung

Die Erfindung betrifft eine Elektrode für Plasmabrenner zum Plasmaschneiden und die Verwendung der Elektrode für diesen Plasmabrenner.

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, z. B. das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens.

Der Plasmastrahl kann in seinen Parametern durch die Gestaltung der Düse und Elektrode stark beeinflusst werden. Diese Parameter des Plasmastrahls sind z.B. der Strahldurchmesser, die Temperatur, Energiedichte und die Strömungsgeschwindigkeit des Gases.

Beim Plasmaschneiden wird das Plasma üblicherweise durch eine Düse, die gas- oder wassergekühlt sein kann, eingeschnürt. Dadurch können Energiedichten bis 2 x 10⁶ W/cm² erreicht werden. Im Plasmastrahl entstehen Temperaturen bis zu 30.000°C, die in Verbindung mit der hohen Strömungsgeschwindigkeit des Gases sehr hohe Schneidgeschwindigkeiten an allen elektrisch leitfähigen Werkstoffen ermöglichen.

Ein Plasmabrenner besteht im Wesentlichen aus einem Plasmabrennerkopf 1, einer Elektrode 7 und einer Düse 4, weitere Bestandteile können eine Elektrodenaufnahme 6 zur Fixierung der Elektrode 7 und die Düsenhalterung 5 sowie die Düsenkappe 2 zur Fixierung der Düse 4 sein. Das Plasmagas PG wird durch die Plasmagasführung 3 in den Raum zwischen Elektrode 7 und Düse 4 zugeführt und strömt letztlich durch die Düsenkanal 4.1 durch die Düse 4.

Moderne Plasmabrenner verfügen zusätzlich über eine Düsenschutzkappe 9 und einer Sekundärgasführung 9.1 über die ein Sekundärgas SG dem Plasmastrahl zugeführt wird. Oft werden die Düse 4 und die Elektrode 7 mit flüssigem Kühlmittel, z. B. Wasser gekühlt.

Das Plasmaschneiden ist heute ein etabliertes Verfahren zum Schneiden elektrisch leitender Werkstoffe wobei je nach Schneidaufgabe unterschiedliche Gase und Gasgemische eingesetzt werden.

Dafür werden dann unterschiedliche Elektroden 7 und Düsen 4 eingesetzt. Diese verschleißen während des Betreibens des Plasmabrenners und müssen dann ausgetauscht werden. Um einen Plasmabrenner für unterschiedliche Gase oder Gasgemische einsetzen zu können, sind die Plasmabrenner, Elektroden 7 und Düsen 4 so gestaltet, dass ein Plasmabrenner durch den Austausch der Elektroden 7 und Düsen 4 für unterschiedliche Gase eingesetzt werden kann.

Elektroden 7 bestehen in der Regel aus einem Elektrodenhalter 7.1 und einem Emissionseinsatz 7.2. Grundsätzlich kann zwischen zwei Bauformen unterschieden werden. Beim Schneiden mit sauerstoffhaltigen Plasmagasen wird in der Regel eine sogenannte Flachelektrode eingesetzt, d.h. der Emissionseinsatz 7.2 befindet sich mit Ausnahme seiner vorderen Emissionsfläche im Elektrodenhalter 7.1. Der Emissionseinsatz 7.2 besteht aus Hafnium oder Zirkon. Für Elektrodenhalter 7.1 werden Werkstoffe, die gut strom- und wärmeleitend sind, wie z. B. Kupfer oder Silber eingesetzt. Bei Elektroden 7 für das Schneiden mit nicht sauerstoffhaltigen Gasen oder Gasgemischen, z.B. Argon, Wasserstoff, Stickstoff wird Wolfram, oft mit Dotierungen (z.B. mit Lanthan), als Werkstoff für den Emissionseinsatz 7.2 verwendet. Dieser ist dann im Elektrodenhalter 7.1 befestigt, ragt aber im Gegensatz zur Flachelektrode aus diesem heraus und wird oft als Spitzenelektrode bezeichnet.

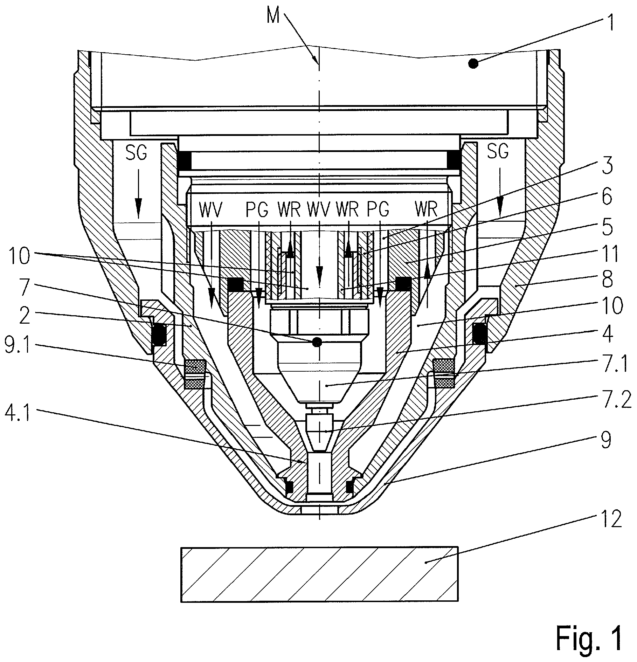

Ein solcher Aufbau kann auch der Figur 1 entnommen werden, wobei hier bereits ein Beispiel einer erfindungsgemäßen Elektrode gezeigt ist.

In DE 10144 516 A1 ist eine solche Elektrode beschrieben. Hier ist eine Elektrode in einer Halterung befestigt und die Elektrode ragt mit ihrer Spitze in eine Düsenvorkammer hinein. Das Elektrodenmaterial besteht aus Wolfram und ist in eine Halterung aus elektrisch leitfähigem Material, vorzugsweise Kupfer oder Silber eingepresst. Die Halterungen werden in der Regel wassergekühlt, um eine effektive Wärmeableitung zu realisieren.

Auch in DE 10 2008 018 430 B4 wird ein Plasmabrenner mit Plasmagas- und Sekundärgaszuführung und einer Düse sowie einer Spitzenelektrode beschrieben. Die Elektrode besteht aus einem Elektrodenhalter und einem Elektrodeneinsatz, der Elektrodeneinsatz ragt aus dem Elektrodenhalter heraus. Bei dieser technischen Lösung liegt das Hauptaugenmerk jedoch auf der Verbesserung der Kühlung der Düse.

Bei all diesen Anordnungen besteht das Problem, dass die Lebensdauer der Elektrode und die Schnittqualität oft nicht ausreichend sind.

Einerseits sollen die Elektroden zwar gut gekühlt werden, dennoch muss eine hohe Temperatur an der Emissionsfläche erreicht werden, um eine sichere Emission der Elektronen für die Ausbildung eines Lichtbogens zu erreichen. Die Emission soll möglichst gleichmäßig über eine Fläche erfolgen, was wiederum für ihre Lebensdauer positiv ist. Wichtig ist auch, dass die die Emissionstemperatur nach dem Zünden des Lichtbogens in möglichst kurzer Zeit erreicht wird.

Zusätzlich sollte die Elektrode so gestaltet sein, dass ein Plasmabrenner möglichst leicht zwischen den verwendeten Plasmagasen umgerüstet werden kann. Eine weitere Anforderung ist eine hohe Zentrizität zwischen dem Emissionseinsatz und der Düse. Dies führt zu besseren Schneidergebnissen und zu verlängerter Lebensdauer.

So ist aus DE 299 05 658 U1 ein Hochfrequenz-Plasmabrenner bekannt, bei dem eine ringförmige Nut in der Nähe des Bereiches, in dem der Abstand zwischen Elektrode und dem Brennerkörper am kleinsten ist, vorhanden sein soll. US 6,099,915 betrifft ein Verfahren zur Beschichtung von Materialien durch Plasmaauftragsschweißen eines Pulvers.

In US 4,675,493 ist eine Bogenentladungsvorrichtung mit einer ringförmigen Düse. Die eine Entladungselektrode umschließt, beschrieben.

Eine Kathodenanordnung für eine elektrische Lichtbogenspritzvorrichtung ist aus US 2002/0144982 A1 bekannt.

US 5,726,414 betrifft einen Plasmabrenner zum Schweißen oder Schneiden. Ein Brenner für das Wolfram-Inertgas-Schweißen sowie eine Elektrode zur Verwendung bei einem solchen Brenner sind in EP 2 457 681A1 beschrieben. Es ist daher Aufgabe der Erfindung Elektroden für Plasmabrenner, die bevorzugt zum Plasmaschneiden eingesetzt werden können, zur Verfügung zu stellen, die eine erhöhte Lebensdauer erreichen und gleichzeitig ein verbessertes Ansprechverhalten nach dem Zünden eines Lichtbogens bis zum Erreichen einer für die Emission von Elektroden geeigneten Temperatur aufweisen. Erfindungsgemäß wird diese Aufgabe mit einer Elektrode für Plasmabrenner gelöst, die die Merkmale des Anspruchs 1 aufweist. Der Anspruch 11 betrifft die Verwendung der erfindungsgemäßen Elektrode. Vorteilhafte Ausgestaltungen und Weiterbildungen können mit in untergeordneten Ansprüchen realisiert werden.

Die erfindungsgemäße Elektrode für Plasmaschneidbrenner ist aus einem Elektrodenhalter und einem Emissionseinsatz gebildet, die kraft- und/oder formschlüssig miteinander verbunden sind. Der Emissionseinsatz weist entlang seiner Längsachse mindestens zwei Abschnitte auf. Dabei weist mindestens ein erster Abschnitt, der neben einem vierten Abschnitt oder zwischen einem dritten und einem zweiten Abschnitt angeordnet ist, einen reduzierten Außendurchmesser bei einer rotationssymmetrischen Ausbildung des Emissionseinsatzes oder eine reduzierte Querschnittsfläche, bei einem nichtrotationssymmetrischen Emissionseinsatz in Bezug zu anderen Abschnitten auf.

Der mindestens eine erste Abschnitt mit reduziertem Außendurchmesser oder reduzierter Querschnittsfläche kann in Form einer nutenförmigen, bevorzugt über die gesamte äußere Mantelfläche radial umlaufenden Vertiefung ausgebildet sein.

Durch eine solche Ausbildung des Emissionseinsatzes ist die Querschnittsfläche im Bereich des mindestens einen ersten Abschnitts mit reduziertem Außendurchmesser oder reduzierter Querschnittsfläche ebenfalls reduziert. Dadurch erhöht sich in diesem Bereich der elektrische Stromfluss, so dass es zu einer Aufheizung des Emissionseinsatzes in kürzerer Zeit, in Bezug zu einer vergleichbaren elektrischen Leistung, die bei einer Elektrode, ohne einen solchen ersten Abschnitt, erreicht werden kann, kommt.

Da sich im Anschluss an einen ersten Abschnitt mit reduziertem Außendurchmesser oder reduzierter Querschnittsfläche ein weiterer dritter Abschnitt in Richtung eines zu bearbeitenden Werkstücks unmittelbar anschließt, der zumindest am Rand des ersten Abschnitts mit reduziertem Außendurchmesser oder reduzierter Querschnittsfläche einen größeren Außendurchmesser oder eine größere Querschnittsfläche aufweist, steht dort eine entsprechend größere Oberfläche für die Emission von Elektronen zur Verfügung, was sich beim Plasmaschneidprozess zusätzlich positiv auswirkt.

Ein vierter Abschnitt, der sich in Richtung eines zu schneidenden Werkstücks an den ersten Abschnitt mit reduziertem Außendurchmesser oder reduzierter Querschnittsfläche anschließend angeordnet ist, kann sich in Richtung Werkstück konisch verjüngend ausgebildet sein. Dies kann über seine gesamte Länge der Fall sein. Es kann aber lediglich ein Teilabschnitt oder ein weiterer Abschnitt, der in Richtung des Werkstücks angeordnet ist, sich konisch verjüngend ausgebildet sein.

Zwischen dem ersten Abschnitt mit reduziertem Außendurchmesser oder reduzierter Querschnittsfläche und einem sich konisch verjüngenden vierten Abschnitt kann aber auch ein dritter Abschnitt angeordnet sein, der einen konstanten Außendurchmesser oder eine konstante Querschnittsfläche aufweist. An einen solchen dritten Abschnitt kann mindestens ein weiterer vierter Abschnitt angeordnet sein, der sich konisch verjüngend ausgebildet ist, vorhanden sein. Dieser vierte Abschnitt kann dann die Spitze der Elektrode bilden.

Die in Richtung eines zu bearbeitenden Werkstücks weisende Spitze des Emissionseinsatzes kann kegelförmig, pyramidenförmig, oder kegelstumpfförmig bzw. pyramidenstumpfförmig ausgebildet sein.

Ein in Richtung eines zu bearbeitenden Werkstücks in Form eines kegel- oder pyramidenstumpfförmig ausgebildeten Emissionseinsatz weist eine in Form einer Kreisfläche oder eines Vielecks ausgebildete in Richtung Werkzeug angeordnete Stirnfläche auf. Diese Stirnfläche sollte kleiner als alle anderen am Emissionseinsatz vorhandenen Außendurchmesser oder Querschnittflächen aller Abschnitte sein.

Der erste Abschnitt mit reduziertem Außendurchmesser oder reduzierter Querschnittsfläche kann als eine rechteckige, trapezförmige, teilkreisförmige oder keilförmige Vertiefung ausgebildet sein.

Im Elektrodenhalter einer erfindungsgemäßen Elektrode kann mindestens ein Hohlraum ausgebildet sein, in und/oder durch den Kühlmittel geführt werden kann.

Der Elektrodenhalter sollte aus einem gut elektrisch und wärmeleitenden Werkstoff, bevorzugt Ag oder Cu oder einer Legierung davon, gebildet sein. Für den Emissionseinsatz (7.2) kann Wolfram oder eine Wolframlegierung oder Hafnium oder eine Hafniumlegierung mit einer Schmelztemperatur > 2000 °C als Werkstoff eingesetzt werden.

Der erste Abschnitt mit reduziertem Außendurchmesser oder reduzierter Querschnittsfläche, der in Form einer nutenförmigen Vertiefung mit einem reduzierten Außendurchmesser oder reduzierter Querschnittsfläche ausgebildet ist, sollte um mindestens 20 % kleiner als ein Außendurchmesser oder eine Querschnittsfläche eines unmittelbar neben dem Abschnitt mit reduziertem Außendurchmesser oder reduzierter Querschnittsfläche angeordneten zweiten oder drittenAbschnitts sein.

Der Emissionseinsatz soll keinen durchgehenden Kanal aufweisen. Er sollte aus Vollmaterial bestehen und keine Innenbohrung aufweisen.

Der Emissionseinsatz sollte bevorzugt mittels einer Presspassung mit dem Elektrodenhalter verbunden sein. Die Presspassung kann mit einer stoffschlüssigen Verbindung, bevorzugt einer Lötverbindung kombiniert werden.

Eine erfindungsgemäße Elektrode kann an einem Plasmabrenner verwendet werden, wobei der Plasmabrenner mindestens einen Plasmabrennerkopf, mit einer aus dem Elektrodenhalter und dem Emissionseinsatz gebildeten Elektrode, einer Düse, einer Gaszuführung für Plasmagas ausgebildet ist und am Emissionseinsatz ein erster Abschnitt mit gegenüber mindestens zwei neben dem ersten Abschnitt angeordneten Abschnitten reduziertem Außendurchmesser oder reduzierter Querschnittsfläche vorhanden ist.

Der Außendurchmesser des Emissionseinsatzes kann im Bereich 1,5 mm bis 6 mm liegen. Der Außendurchmesser des Elektrodenhalters sollte entsprechend größer sein.

Im Übrigen kann der Plasmabrenner in herkömmlicher Form mit unterschiedlichen Modifikationen ausgebildet sein, was beispielsweise eine Sekundärgaszuführung oder einen Düsenraum betreffen kann. Die Elektrode kann innerhalb eines Düsenraums angeordnet sein.

Die Erfindung soll nachfolgend an Hand von Beispielen näher erläutert werden. Dabei können die Merkmale, die den Beispielen entnommen werden können, in unterschiedlichster Form miteinander kombiniert werden. Sie sind nicht ohne Weiteres an das jeweilige Beispiel gebunden.

Dabei zeigen:
Figur 1 eine Schnittdarstellung durch einen Plasmabrenner, bei dem ein Beispiel einer erfindungsgemäßen Elektrode eingesetzt worden ist;
Figur 2 ein Beispiel einer erfindungsgemäßen Elektrode;
Figuren 3.1-3.3 drei Beispiele von erfindungsgemäßen Elektroden;
Figur 4 ein weiteres Beispiel einer erfindungsgemäßen Elektrode;
Figuren 4.1-4.8 sechs weitere Beispiele erfindungsgemäßer Elektroden;
Figuren 5, 5.1-5.2 drei weitere Beispiele erfindungsgemäßer Elektroden und
Figuren 6-6.4 fünf weitere Beispiele erfindungsgemäßer Elektroden.

Der in Figur 1 gezeigte Plasmabrenner besteht zumindest aus einem Plasmabrennerkopf 1 mit einer Elektrode 7, einer Düse 4 und einer Gaszuführung 3 für das Plasmagas PG.

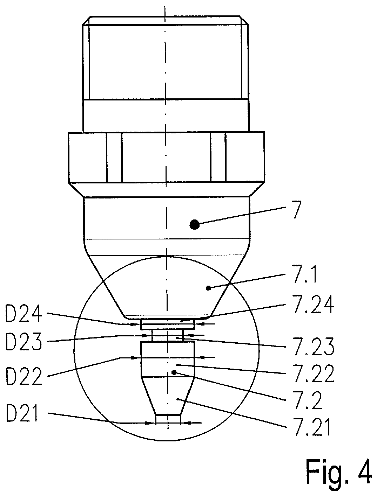

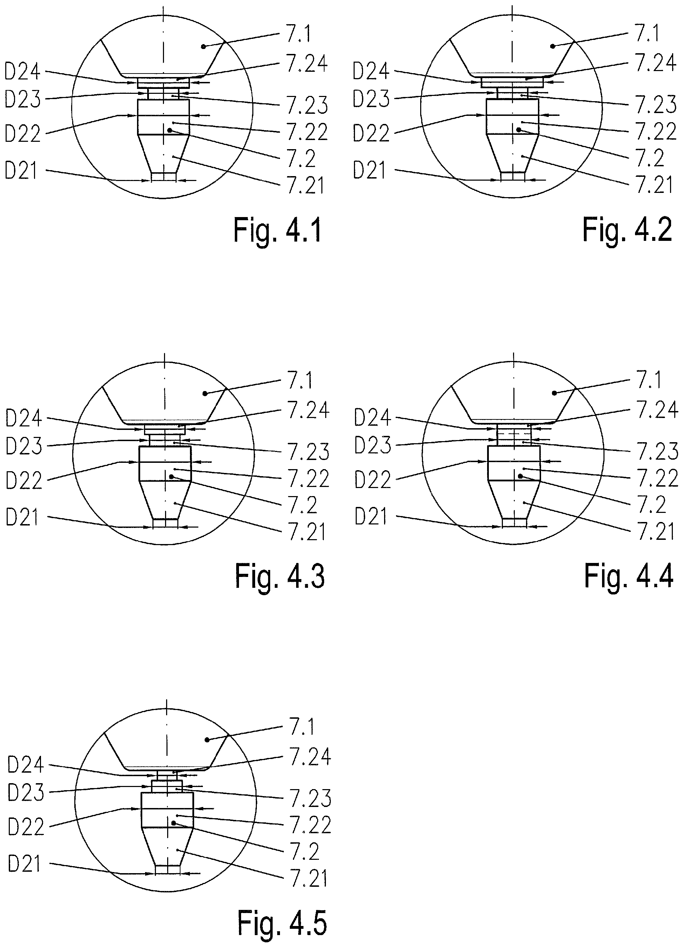

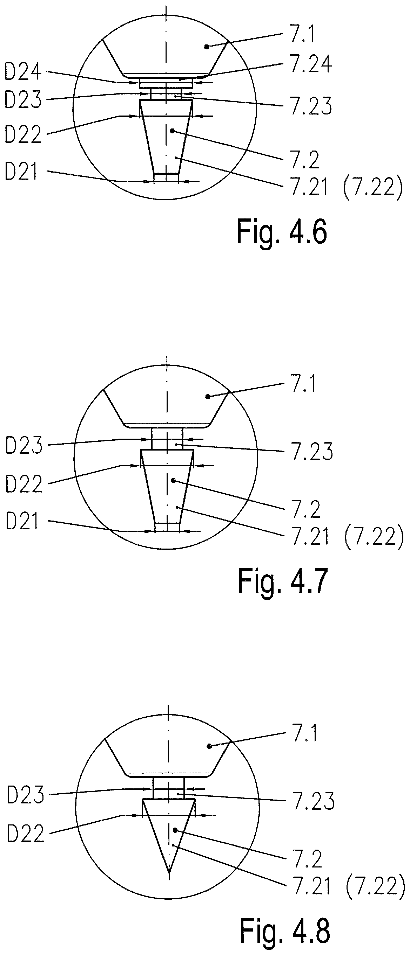

Die Elektrode 7 besteht aus einem Elektrodenhalter 7.1 und einem Emissionseinsatz 7.2, wobei der Emissionseinsatz 7.2 der Elektrode 7, vom Elektrodenhalter 7.1 aus gesehen, zumindest aus einem ersten Abschnitt 7.23 und einem sich zur Brennerspitze hin verjüngenden vierten Abschnitt 7.21 besteht und der kleinste Durchmesser des ersten Abschnitts 7.23 geringer ist als der größte Durchmesser des sich verjüngenden vierten Abschnitts 7.21. Beispiele hierzu sind in den Figuren 4, 4.1, 4.2, 4.3, 4.4, 4.5, 4.6, 5, 5.1, 5.2, 6, 6.1, 6.2, 6.3 und 6.4 gezeigt.

Die Elektrode 7 ist in die Elektrodenaufnahme 6 mittels Gewinde eingeschraubt und wird von innen mit einem Kühlmedium, das über das Innere eines Kühlrohrs 11 als Kühlmittelvorlauf WV zugeführt und den zwischen dem Äußeren des Kühlrohrs 11 und der Elektrodenaufnahme 5 als Kühlmittelrücklauf WR gebildeten Raum zurückgeführt wird, gekühlt.

Die Düse 4 wird von einer Düsenkappe 2 gehalten, zwischen der Düse 4 und der Düsenkappe 2 strömt ein Kühlmedium, das über den Kühlmittelvorlauf WV zu und den Kühlmittelrücklauf WR zurückgeführt wird.

Eine Düsenschutzkappe 9 umschließt die Düse 4 und die Düsenkappe 2. Dazwischen strömt das Sekundärgas SG, das durch die Sekundärgasführung 9.1, die gleichzeitig die Düsenschutzkappe 9 von der Düsenkappe 2 isoliert und auf Abstand hält. Dabei kann die Sekundärgasführung 9.1 so gestaltet sein, dass sie das Sekundärgas SG rotieren lässt. Die Düsenschutzkappe 9 wird durch eine Düsenschutzkappenhalterung 8 fixiert, die am Plasmabrennerkopf mittels Gewinde befestigt ist.

Das Plasmagas PG kann durch eine hier nicht gezeigte Plasmagasführung, die zwischen der Düse 4 und der Elektrode 5 angeordnet ist, in Rotation versetzt werden.

Die Elektrode 7 besteht aus einem Elektrodenhalter 7.1 und einem Emissionseinsatz 7.2. Der Emissionseinsatz 7.2 ist im Elektrodenhalter 7.1 befestigt, dies kann kraft- oder formschlüssig erfolgt sein. So wird ein guter Wärmeübergang zwischen dem Emissionseinsatz 7.2 und dem Elektrodenhalter 7.1 erreicht. Der Elektrodenhalter 7.1 kann wassergekühlt sein, wobei er im Inneren einen Hohlraum aufweisen kann, durch den das Kühlwasser fließt. Der Elektrodenhalter 7.1 besteht aus gut wärme- und elektrisch leitendem Material (Cu, Ag). Für den Emissionseinsatz 7.2 wird Wolfram, das mit Dotierungen, z. B. Lanthan versehen sein kann, eingesetzt.

Am Emissionseinsatz 7.2 ist vom Elektrodenhalter 7.1 aus gesehen, zumindest ein ersten Abschnitt 7.23 vorhanden, an den sich ein zur Brennerspitze hin verjüngender vierter Abschnitt 7.21 anschließt. Dazwischen ist der zylinderförmige dritte Abschnitt 7.22 angeordnet. Der kleinste Außendurchmesser des ersten Abschnitts 7.23 ist dabei kleiner als der größte Durchmesser des dritten Abschnitts 7.22 oder eines sich verjüngenden vierten Abschnitts 7.21. Der vierte Abschnitt 7.21 kann kegelstumpff- pyramidenstumpf-, kegel oder pyramidenförmig ausgebildet sein.

Der erste Abschnitt 7.23 kann eine nutenförmige Vertiefung bilden, die bevorzugt radial umlaufend um die gesamte Mantelfläche der Elektrode 7 ausgebildet ist.

Der Emissionseinsatz 7.2 kann auch mehrere Abschnitte aufweisen.

Mit einer Ausbildung eines Emissionseinsatzes 7.2, der einen ersten Abschnitt 7.23 mit reduziertem Außendurchmesser oder reduzierter Querschnittsfläche aufweist, können nachfolgend genannte Vorteile erreicht werden:
- erhöhter elektrischer und/oder thermischer Widerstand im Bereich des ersten Abschnitts 7.23,
- dadurch Erreichen einer ausreichend hohen Emissionstemperatur bei gleichzeitig ausreichend großer Emissionsfläche für den Lichtbogen,
- zusätzlich ein Erreichen der Emissionstemperatur des Emissionseinsatzes in kürzerer Zeit, bei gleichzeitig ausreichend großer Emissionsfläche für den Lichtbogen,
- kein einseitiges Ansetzen des Lichtbogens auf einem Teil der Emissionsfläche, dadurch längere Lebensdauer, bessere Zentrizität des Lichtbogens und bessere Schnittqualität.

Dabei kann der Ablauf folgendermaßen erfolgen:
- Zündung erfolgt durch Hochspannung oder Hochfrequenzentladung zwischen Elektrode und Düse und ein Pilotlichtbogen kann dadurch gezündet werden,
- der durch den Düsenkanal austretende Plasmastrahl ionisiert die Strecke zwischen dem Plasmabrenner und dem Werkstück
- danach kann sich der Hauptlichtbogen zwischen der Elektrode und dem Werkstück ausbilden und das Werkstück kann geschnitten werden.

Weiterhin ist eine hohe Zentrizität gegenüber Spannzangenkonstruktionen, durch das Einschrauben der Elektrode 7 erreichbar. Dabei wirkt sich der Aufbau aus Elektrodenhalter 7.1 und Emissionseinsatz 7.2 (z. B. Einpressen o.ä.) vorteilhaft aus. Dadurch kann ein leichter Wechsel auch zwischen unterschiedlich konfigurierten Elektroden erfolgen.

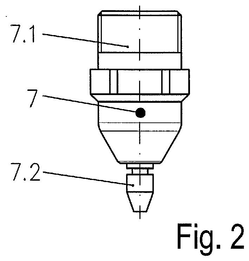

Die Figur 2 zeigt in schematischer Form ein Beispiel einer erfindungsgemäßen Elektrode 7, bestehend aus einem Elektrodenhalter 7.1 und einem Emissionseinsatz 7.2, wobei der Elektrodenhalter 7.1 über ein Außengewinde verfügt.

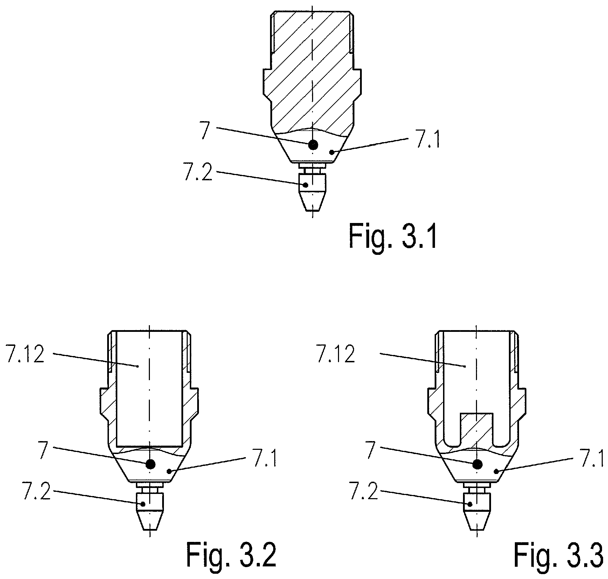

Der Figur 3.1 kann entnommen werden, dass ein Elektrodenhalter 7.1 massiv ausgebildet ist und ein Außengewinde aufweisen kann, mit dem die Elektrode 7 mit dem Plasmabrenner verbunden werden kann.

Bei dem in Figur 3.2 gezeigten Beispiel ist am Elektrodenhalter 7.1 ein Kühlmittelraum 7.12 als einfache Sacklochbohrung ausgebildet. Bei dem in Figur 3.3 gezeigten Beispiel hat der Kühlmittelraum 7.12 eine vorteilhafte Gestaltung, da im Bereich, in dem der Emissionseinsatz 7.2 mit dem Elektrodenhalter 7.1 verbunden ist, eine Werkstoffanhäufung mit entsprechend größerer Oberfläche, die für die Wärmeabführung nutzbar ist, vorhanden ist.

Die Figuren 4 und Figur 4.1 zeigen eine Elektrode 7, wie sie auch bei dem Plasmabrenner nach Figur 1 eingesetzt werden kann. Dabei ist der Emissionseinsatz 7.2 mit einem zweiten Abschnitt 7.24, der aus dem Elektrodenhalter 7.1 herausragt ausgebildet. An diesen Abschnitt zweiten 7.24 schließt sich in Richtung auf ein zu bearbeitendes Werkstück (nicht gezeigt) der erste Abschnitt 7.23 mit reduziertem Außendurchmesser D23 an. Auf diesen ersten Abschnitt 7.23 folgt ein zylinderförmiger dritter Abschnitt 7.22, an den sich der in Richtung Werkstück konisch verjüngende kegelstumpfförmige vierte Abschnitt 7.21 an. Die Außendurchmesser D24 und D22 sind bei diesem Beispiel gleich groß und größer als der Außendurchmesser D23 des ersten Abschnitts 7.23. Der Außendurchmesser D21, der vorderen Stirnfläche, die am vierten Abschnitt 7.21 ausgebildet ist, ist kleiner als der Außendurchmesser D23 und natürlich auch der Außendurchmesser D22 und D24.

Das in Figur 4.2 gezeigte Beispiel unterscheidet sich vom Beispiel nach Figur 4.1 dadurch, dass der Außendurchmesser D24 des Abschnitts 7.24 größer als der Außendurchmesser D22 des Abschnitts 7.22 ist und beide Außendurchmesser D22 und D24 größer als der Außendurchmesser D23 des ersten Abschnitts 7.23 sind.

Bei dem in Figur 4.3 gezeigten Beispiel sind die Außendurchmesserverhältnisse der Abschnitte 7.22 und 7.24 umgekehrt. Es gilt D22 > D24 > D23.

Die Figur 4.4 zeigt ein Beispiel, bei dem die Außendurchmessergrößen so gewählt sind, dass D24 = D23 < D22 sind. Dies bedeutet, dass der Emissionseinsatz 7.2 mit dem Außendurchmesser D23, des Abschnitts 7.23 im Elektrodenhalter 7.1 befestigt ist.

Bei dem in Figur 4.5 gezeigten Beispiel sind die Außendurchmesser der ersten, zweiten und dritten Abschnitte 7.24, 7.23 und 7.22 so gewählt, dass D24 < D23 < D22 ist. Der kleinste Außendurchmesser ist also im Bereich 7.24 vorhanden, der unmittelbar unterhalb des Elektrodenhalters 7.1 angeordnet ist und mit dem der Emissionseinsatz 7.2 aus dem Elektrodenhalter 7.1 herausragt.

Bei dem in Figur 4.6 gezeigten Beispiel sind die Außendurchmesser so gewählt, dass D24 = D22 > D23 ist.

Das in Figur 4.7 gezeigte Beispiel hat am Emissionseinsatz 7.2 wieder nur einen ersten Abschnitt 7.23 mit reduziertem Außendurchmesser, der unmittelbar hinter dem Elektrodenhalter 7.1 angeordnet ist. An diesen schließt sich ein sich konisch in Richtung Werkstück 12 verjüngender vierter Abschnitt 7.21 an, dessen größter Außendurchmesser D22 größer als der Außendurchmesser D23 des ersten Abschnitts 7.23 ist. Die in Richtung eines zu bearbeitenden Werkstücks 12 weisende Stirnfläche des Emissionseinsatzes 7.2 weist eine Kreisform auf und hat einen Außendurchmesser D21, der kleiner als der Außendurchmesser D23 ist.
Bei diesem und den in Figuren 4.6 und 4.8 gezeigten Beispiel könnte zwischen den ersten und vierten Abschnitten 7.23 und 7.21 auch ein weiterer dritter Abschnitt 7.22 vorhanden sein, der jedoch in Richtung der Längsachse des Emissionseinsatzes 7.2 sehr kurz sein kann. Sein Außendurchmesser D22 kann dabei gleich groß, wie der maximale Außendurchmesser D21 des vierten Abschnitts 7.21 sein.
Beim Beispiel nach Figur 4.8 ist der vierte Abschnitt 7.21 kegelförmig ausgebildet und hat in Richtung Werkstück 12 eine Spitze.

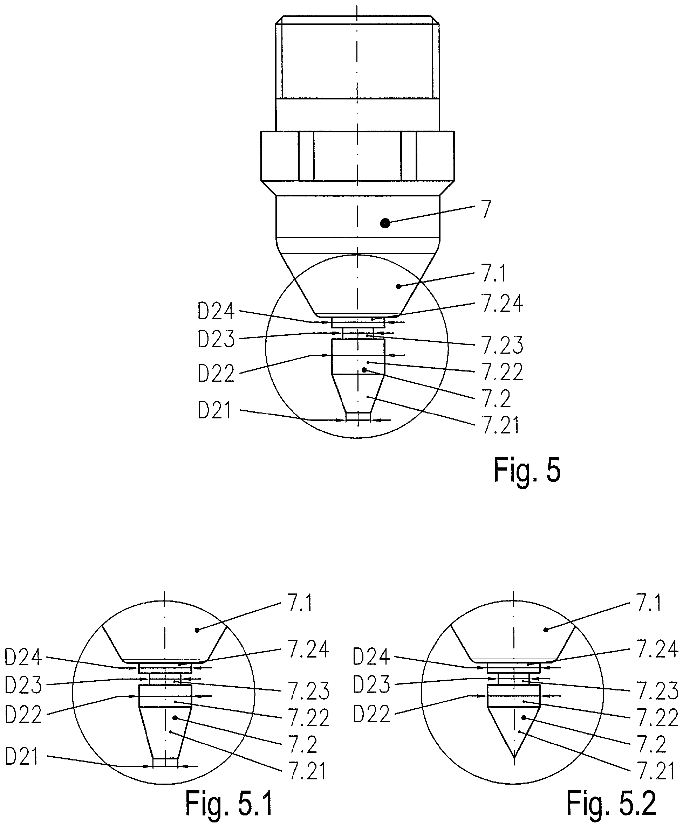

Die Figuren 5 und 5.1 zeigen nochmals eine Elektrode 7 mit einem in Form eines Kegelstumpfes ausgebildeten vierten Abschnitts 7.21, wie dies beim Beispiel nach Figur 4, der Fall ist.
Bei dem Beispiel nach Figur 5.2 ist der konische vierte Abschnitt 7.21 kegelförmig mit einer Spitze am in Richtung Werkstück weisenden Ende des Emissionseinsatzes 7.2 ausgebildet.

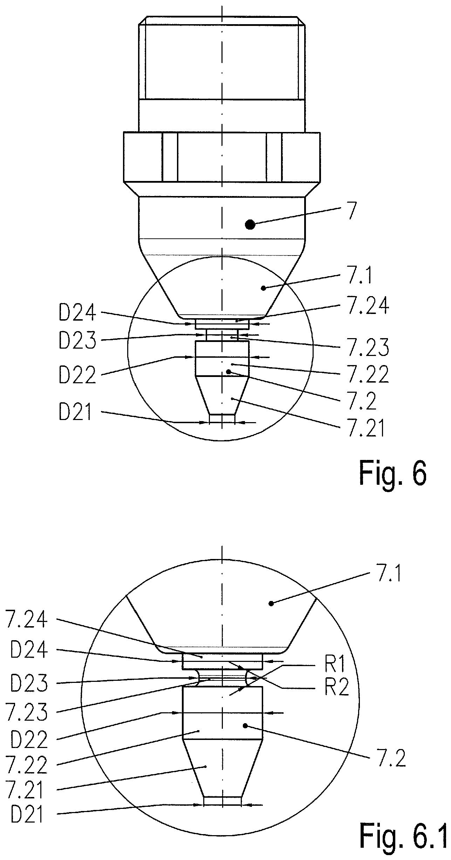

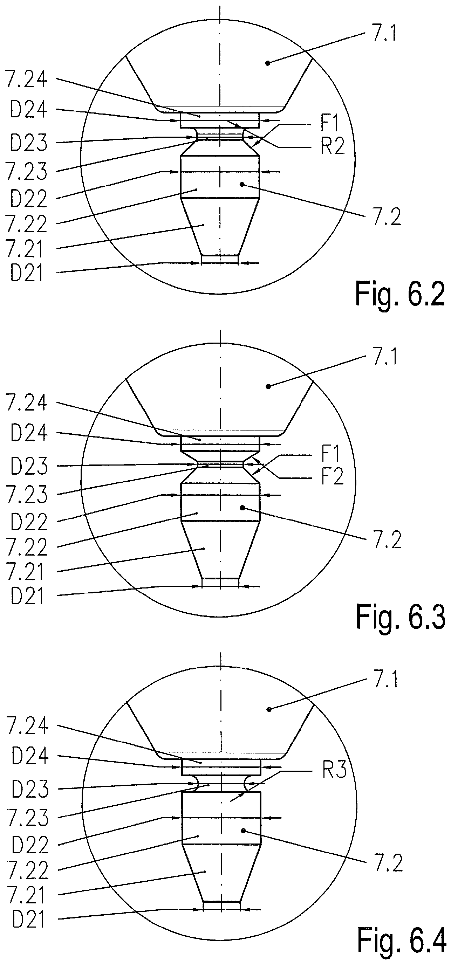

Die Figuren 6 bis 6.4 zeigen Beispiele mit unterschiedlich ausgebildeten Abschnitt 7.23 mit reduziertem Außendurchmesser.
Das Beispiel nach Figur 6 entspricht wieder dem Beispiel nach Figur 4 und der erste Abschnitt 7.23 mit reduziertem Außendurchmesser hat einen rechteckigen Querschnitt.
Die Figur 6.1 zeigt ein Beispiel bei dem der Übergang der dritten und zweiten Abschnitte 7.22 und 7.24 zum ersten Abschnitt 7.23 mit den Radien R1 und R2 ausgebildet ist. Beim Beispiel nach Figur 6.2 ist der Übergang des ersten Abschnitts 7.23 zum dritten Abschnitt 7.22 mit einer Fase F1 und der Außendurchmesser des ersten Abschnitts 7.23 mit dem Radius R2 ausgebildet, so dass eine teilkreisförmige Außenkontur des ersten Abschnitts 7.23, die von der vorab beschriebenen Rechteckform abweicht, ausgebildet ist.

Bei dem in Figur 6.3 gezeigten Beispiel sind die Übergänge des ersten Abschnitts 7.23 zu den benachbarten dritten und vierten Abschnitten 7.22 und 7.24 als Fasen F1 und F2 ausgebildet.

Die Figur 6.4 zeigt ein Beispiel, bei dem der gesamte erste Abschnitt 7.23 mit dem Radius R3 ausgebildet ist und so entsprechend runde Übergänge zu den dritten und zweiten Abschnitten 7.22 und 7.24 erreicht worden sind.

Bei allen Beispielen besteht die nicht dargestellte Möglichkeit, die Längen der einzelnen Abschnitte 7.21, 7.22, 7.23 und 7.24 in Richtung der Längsachse der Elektrode 7 zu variieren und so noch zusätzlich an die jeweiligen Plasmabrennerparameter, beispielsweise dessen Leistung anpassen zu können.

### Bezugszeichenliste:

- 1: Plasmabrennerkopf
- 2: Düsenkappe
- 3: Plasmagaszuführung
- 4: Düse
- 4.1: Düsenkanal
- 5: Düsenhalterung
- 6: Elektrodenaufnahme
- 7: Elektrode
- 7.1: Elektrodenhalter
- 7.2: Emissionseinsatz
- 7.21: vierter Abschnitt des Emissionseinsatzes
- 7.22: dritter Abschnitt des Emissionseinsatzes
- 7.23: erster Abschnitt des Emissionseinsatzes
- 7.24: zweiter Abschnitt des Emissionseinsatzes
- 8: Düsenschutzkappenhalterung
- 9: Düsenschutzkappe
- 9.1: Sekundärgasführung
- 10: Kühlmittelraum
- 11: Kühlrohr
- 12: Werkstück
- D21: Durchmesser des vierten Abschnitts des Emissionseinsatzes
- 7.2 D22: Durchmesser des dritten Abschnitts des Emissionseinsatzes
- 7.2 D23: Durchmesser des ersten Abschnitts des Emissionseinsatzes
- 7.2 D24: Durchmesser des zweiten Abschnitts des Emissionseinsatzes
- 7.2 F: Fase
- M: Mittelachse der Plasmabrennerkopfes 1 und der Elektrode 7
- PG: Plasmagas
- R: Radius
- SG: Sekundärgas
- WV: Kühlmittelvorlauf
- WR: Kühlmittelrücklauf

## Patentansprüche

1. Elektrode für Plasmaschneidbrenner, die aus einem Elektrodenhalter (7.1) und einem Emissionseinsatz (7.2) gebildet ist, die kraft- und/oder formschlüssig miteinander verbunden sind,
wobei der Emissionseinsatz (7.2) keine Innenbohrung oder keinen durchgehenden Kanal aufweist und entlang seiner Längsachse mindestens einen ersten Abschnitt (7.23),
der zwischen einem zweiten Abschnitt (7.24) oder dem Elektrodenhalter (7.1) und einem dritten Abschnitt (7.22) oder neben einem vierten Abschnitt (7.21) angeordnet ist, und einen reduzierten Außendurchmesser bei einer rotationssymmetrischen Ausbildung des Emissionseinsatzes (7.2) oder einer reduzierte Querschnittsfläche, bei einem nichtrotationssymmetrischen Emissionseinsatz (7) in Bezug zu dem Elektrodenhalter (7.1), zweiten Abschnitt (7.24), dritten Abschnitt (7.22) und/oder vierten Abschnitt (7.21) aufweist,
**dadurch gekennzeichnet, dass**
sich an einen in Richtung eines zu schneidenden Werkstücks an den ersten Abschnitt (7.23) mit reduziertem Außendurchmesser oder reduzierter Querschnittsfläche der vierte Abschnitt (7.21) anschließt, wobei der vierte Abschnitt (7.21) sich in Richtung Werkstück konisch verjüngend ausgebildet ist
oder
zwischen dem ersten Abschnitt (7.23) mit reduziertem Außendurchmesser oder reduzierter Querschnittsfläche und dem sich konisch verjüngenden vierten Abschnitt (7.21) der dritte Abschnitt (7.22) angeordnet ist, wobei der dritte Abschnitt (7.22) einen konstanten Außendurchmesser oder eine konstante Querschnittsfläche aufweist.

2. Elektrode nach Anspruch 1, **dadurch gekennzeichnet, dass** der mindestens eine erste Abschnitt (7.23) mit reduziertem Außendurchmesser oder reduzierter Querschnittsfläche in Form einer nutenförmigen, bevorzugt über die gesamte äußere Mantelfläche radial umlaufenden Vertiefung ausgebildet ist.

3. Elektrode nach einem der vorhergehenden Ansprüche, **dadurch gekennzeichnet, dass** der Emissionseinsatz (7.2) eine in Richtung eines zu bearbeitenden Werkstücks weisende Spitze aufweist, die kegelförmig, pyramidenförmig, oder kegelstumpfförmig bzw. pyramidenstumpfförmig ausgebildet ist.

4. Elektrode nach Anspruch 3, **dadurch gekennzeichnet, dass** der in Richtung eines zu bearbeitenden Werkstücks mit in Form eines kegel- oder pyramidenstumpfförmigen Emissionseinsatzes (7.21), eine in Form einer Kreisfläche oder eines Vielecks ausgebildete in Richtung Werkzeug angeordneter Stirnfläche als eine Kreisfläche oder vieleckige Fläche eine Querschnittsfläche aufweist, die kleiner ist, als alle am Emissionseinsatz (7.2) vorhandenen erste bis vierte Abschnitte (7.21, 7.22, 7.23 und 7.24).

5. Elektrode nach einem der vorhergehenden Ansprüche, **dadurch gekennzeichnet, dass** der erste Abschnitt (7.23) mit reduziertem Außendurchmesser oder reduzierter Querschnittsfläche als eine rechteckige, trapezförmige, teilkreisförmige oder keilförmige Vertiefung ausgebildet ist.

6. Elektrode nach einem der vorhergehenden Ansprüche, **dadurch gekennzeichnet, dass** im Elektrodenhalter (7.1) mindestens ein Hohlraum ausgebildet ist, in und/oder durch den Kühlmittel führbar ist.

7. Elektrode nach einem der vorhergehenden Ansprüche, **dadurch gekennzeichnet, dass** der Elektrodenhalter (7.1) aus einem gut elektrisch und wärmeleitenden Werkstoff, bevorzugt Ag oder Cu oder einer Legierung davon, und der Emissionseinsatz (7.2) aus Wolfram oder Hafnium oder einer Wolfram- oder Hafniumlegierung gebildet ist.

8. Elektrode nach einem der vorhergehenden Ansprüche, **dadurch gekennzeichnet, dass** der erste Abschnitt (7.23) mit reduziertem Außendurchmesser oder reduzierter Querschnittsfläche in Form einer nutenförmigen Vertiefung mit einem reduzierten Außendurchmesser oder reduzierter Querschnittsfläche, der/die um mindestens 20 % kleiner als ein Außendurchmesser oder eine Querschnittsfläche eines unmittelbar neben dem ersten Abschnitt (7.23) mit reduziertem Außendurchmesser oder reduzierter Querschnittsfläche angeordneten Abschnitts (7.22 oder 7.24) ist.

9. Elektrode nach einem der vorhergehenden Ansprüche, **dadurch gekennzeichnet, dass** der Emissionseinsatz aus Vollmaterial besteht und/oder (7.2) mittels Presspassung mit dem Elektrodenhalter (7.1) verbunden ist.

10. Elektrode nach einem der vorhergehenden Ansprüche, **dadurch gekennzeichnet, dass** der Übergang des ersten Abschnitts (7.23) zu einem daneben angeordneten Abschnitt (7.22, 7.24) mit einem Radius( R1, R2, R3) und/oder einer Fase (F1 oder F2) ausgebildet ist.

11. Verwendung einer Elektrode nach einem der vorhergehenden Ansprüche an einem Plasmabrenner, wobei der Plasmabrenner mindestens einen Plasmabrennerkopf (1), mit einer aus dem Elektrodenhalter (7.1) und dem Emissionseinsatz (7.2) gebildeten Elektrode (7), einer Düse (4), einer Gaszuführung für Plasmagas (PG) aufweist und am Emissionseinsatz (7.2) ein erster Abschnitt (7.23) mit gegenüber mindestens einem neben dem ersten Abschnitt (7.23) angeordneten dritten Abschnitt (7.22) und/oder zweiten Abschnitt (7.24) reduziertem Außendurchmesser oder reduzierter Querschnittsfläche vorhanden ist und der Emissionseinsatz (7.2) keine Innenbohrung oder keinen durchgehenden Kanal aufweist.

## Claims

1. An electrode for plasma cutting torches which is formed from an electrode holder (7.1) and from an emission insert (7.2) which are connected to one another in a force-fitted and/or shape-matched manner, wherein the emission insert (7.2) has no inner bore or no continuous channel and has at least one first section (7.23) along its longitudinal axis,
that is arranged between a second section (7.24) or the electrode holder (7.1) and a third section (7.22) or next to a fourth section (7.21) and has a reduced outer diameter on a rotationally symmetrical formation of the emission insert (7.2) or a reduced cross-sectional surface, with a non-rotationally symmetrical emission insert (7) with respect to the electrode holder (7.1), the second section (7.24), the third section (7.22) and/or the fourth section (7.21),
**characterized in that**
the fourth section (7.21) adjoins the first section (7.23) with a reduced outer diameter or a reduced cross-sectional surface in the direction of a workpiece to be cut, with the fourth section (7.21) conically tapering in the direction of the workpiece; or
with the third section (7.22) being arranged between the first section (7.23) with a reduced outer diameter or a reduced cross-sectional surface and the conically tapering fourth section (7.21), with the third section (7.22) having a constant outer diameter or a constant cross-sectional surface.

2. An electrode in accordance with claim 1, **characterized in that** the at least one first section (7.23) with a reduced outer diameter or a reduced cross-sectional surface is configured in the form of a groove-like recess preferably running around radially over the total outer jacket surface.

3. An electrode in accordance with one of the preceding claims, **characterized in that** the emission insert (7.2) has a tip that faces in the direction of a workpiece to be machined that is of conical form, pyramid form, or truncated cone form or truncated pyramid form.

4. An electrode in accordance with claim 3, **characterized in that** the emission insert (7.21) in the direction of a workpiece in the form of an emission insert (7.21) in the form of a truncated cone or of a truncated pyramid has an end face formed in the shape of a circular surface or of a polygon and arranged in the direction of a tool as a circular surface or a polygonal surface has a cross-sectional surface which is smaller than all the first to fourth sections (7.21, 7.22, 7.23 and 7.24) present at the emission insert (7.2).

5. An electrode in accordance with one of the preceding claims, **characterized in that** the first section (7.23) with a reduced outer diameter or a reduced cross-section is formed as a recess in the form of a rectangle, a trapezoid, a part circle or a wedge.

6. An electrode in accordance with one of the preceding claims, **characterized in that** at least one hollow space is formed in the electrode holder (7.1) and the coolant can be led in and/or through it.

7. An electrode in accordance with one of the preceding claims, **characterized in that** the electrode holder (7.1) is formed from a material with good electrical conductivity and thermal conductivity, preferably Ag or Cu or an alloy thereof, and the emission insert (7.2) is formed from tungsten or hafnium or from a tungsten alloy or hafnium alloy.

8. An electrode in accordance with one of the preceding claims, **characterized in that** the first section (7.23) with a reduced outer diameter or a reduced cross-sectional surface in the form of a groove-like recess with a reduced outer diameter or a reduced cross-sectional surface which is at least 20% smaller than an outer diameter or a cross-sectional surface of a section (7.22 or 7.24) arranged directly next to the first section (7.23) with a reduced outer diameter or a reduced cross-sectional surface.

9. An electrode in accordance with one of the preceding claims, **characterized in that** the emission insert (7.2) comprises a solid material and/or is connected to the electrode holder (7.1) by means of a press fit.

10. An electrode in accordance with one of the preceding claims, **characterized in that** the transition of the first section (7.23) to a section (7.22, 7.24) arranged next to it is formed with a radius (R1, R2, R3) and/or with a chamfer (F1 or F2).

11. Use of an electrode in accordance with one of the preceding claims at a plasma torch, wherein the plasma torch has at least one plasma torch head (1) having an electrode (7) formed from the electrode holder (7.1) and the emission insert (7.2), a nozzle (4), a gas feed for plasma gas (PG) and a first section (7.23) with a reduced outer diameter or a reduced cross-sectional surface with respect to at least one third section (7.22) and/or second section (7.24) arranged next to the first section (7.23) is present at the emission insert (7.2) and the emission insert (7.2) has no inner bore or no continuous channel.

## Revendications

1. Électrode pour chalumeau de coupe au plasma, qui est constituée d'un support d'électrode (7.1) et d'un insert d'émission (7.2), qui sont reliés entre eux par force et/ou par complémentarité de forme,
l'insert d'émission (7.2) ne comprenant aucune alésage interne ou aucun canal traversant et comprend, le long de son axe longitudinal, au moins une première portion (7.23),
qui est disposée entre une deuxième portion (7.24) ou le support d'électrode (7.1) et une troisième portion (7.22) ou est disposée à proximité d'une quatrième portion (7.21), et présente un diamètre extérieur réduit lors d'une réalisation de l'insert d'émission (7.2) avec une symétrie de rotation ou une surface de section transversale réduite, dans le cas d'un insert d'émission (7) sans symétrie de rotation, par rapport au support d'électrode (7.1), une deuxième portion (7.24), une troisième portion (7.22) et/ou une quatrième portion (7.21),
**caractérisée en ce que**
la quatrième portion (7.21) se raccorde, dans la direction d'une pièce à découper, à la première portion (7.23) avec un diamètre extérieur réduit ou une surface de section transversale réduite, la quatrième portion (7.21) étant conçue de façon à se rétrécir de manière conique en direction de la pièce
ou
entre la première portion (7.23) à diamètre extérieur réduit ou surface de section transversale réduite et la quatrième portion (7.21) se rétrécissant de manière conique, est disposée la troisième portion (7.22), la troisième portion (7.22) présentant un diamètre extérieur constant ou une surface de section transversale constante.

2. Électrode selon la revendication 1, **caractérisée en ce que** l'au moins une première portion (7.23) à diamètre extérieur réduit ou surface de section transversale réduite est conçue sous la forme d'une cavité en forme de rainure, de préférence s'étendant radialement sur toute la surface d'enveloppe externe.

3. Électrode selon l'une des revendications précédentes, **caractérisée en ce que** l'insert d'émission (7.2) présente une pointe orientée en direction de la pièce à usiner, qui présente une forme conique, pyramidale, tronconique ou la forme d'une pyramide tronquée.

4. Électrode selon la revendication 3, **caractérisée en ce que** la face frontale disposée dans la direction d'une pièce à usiner avec un insert d'émission (7.21) sous une forme conique ou sous la forme d'une pyramide tronquée, sous la forme d'une surface circulaire ou d'un polygone, en direction d'un outil, présente une surface de section transversale qui est inférieure aux première à quatrième portions (7.21, 7.22, 7.23 et 7.24) existant sur l'insert d'émission (7.2).

5. Électrode selon l'une des revendications précédentes, **caractérisée en ce que** la première portion (7.23) à diamètre extérieur réduit ou surface de section transversale réduite se présente sous la forme d'une cavité rectangulaire, trapézoïdale, sous la forme d'une partie de cercle ou cunéiforme.

6. Électrode selon l'une des revendications précédentes, **caractérisée en ce que**, dans le support d'électrode (7.1) au moins un espace creux est réalisé, dans et/ou à travers lequel un fluide de refroidissement peut être guidé.

7. Électrode selon l'une des revendications précédentes, **caractérisée en ce que** le support d'électrode (7.1) est constitué d'un matériau avec une bonne conduction électrique et thermique, de préférence Ag ou Cu ou un alliage de ceux-ci, et l'insert d'émission (7.2) est constitué de tungstène ou d'hafnium ou d'un alliage de tungstène ou d'hafnium.

8. Électrode selon l'une des revendications précédentes, **caractérisée en ce que** la première portion (7.23) à diamètre extérieur réduit ou surface de section transversale réduite se présente sous la forme d'une cavité en forme de rainure à diamètre extérieur réduit ou surface de section transversale réduite, qui est inférieure d'au moins 20 % à un diamètre extérieur ou une surface de section transversale d'une portion (7.22 ou 7.24) disposée directement à proximité de la première portion (7.23) à diamètre extérieur réduit ou surface de section transversale réduite.

9. Électrode selon l'une des revendications précédentes, **caractérisée en ce que** l'insert d'émission est constitué d'un matériau plein et/ou (7.2) est relié par ajustement serré avec le support d'électrode (7.1).

10. Électrode selon l'une des revendications précédentes, **caractérisée en ce que** la transition de la première portion (7.23) avec une portion (7.22, 7.24) disposée à proximité à est réalisée l'aide d'un rayon (R1, R2, R3) et/ou un chanfrein (F1 ou F2).

11. Utilisation d'une électrode selon l'une des revendications précédentes sur un chalumeau au plasma, le chalumeau au plasma comprenant au moins une tête de chalumeau au plasma (1), avec une électrode (7) constituée du support d'électrode (7.1) et de l'insert d'émission (7.2), une buse (4), une alimentation en gaz pour un gaz de plasma (PG) et sur l'insert d'émission (7.2) une première portion (7.23) avec un diamètre extérieur ou une surface de section transversale réduite par rapport à au moins une troisième portion (7.22) et/ou deuxième portion (7.24) disposée à proximité de la première portion (7.23) et l'insert d'émission (7.2) ne présente aucun alésage interne ou aucun canal traversant.
